# EUROPÄISCHE PATENTSCHRIFT

(11) **EP 0 852 711 B1**
(45) Veröffentlichungstag und Bekanntmachung des Hinweises auf die Patenterteilung: **02.01.2003**
(21) Anmeldenummer: 96934422.5
(22) Anmeldetag: 16.09.1996
(51) Int. Cl.: G01M 3/22, F17D 5/04

(54) **VORRICHTUNG ZUR BESTIMMUNG VON KONZENTRATIONSPROFILEN FLÜSSIGER ODER GASFÖRMIGER STOFFE LÄNGS EINER STRECKE**
DEVICE FOR DETERMINING CONCENTRATION PROFILES OF LIQUID OR GASEOUS SUBSTANCES ALONG A GIVEN PATH
DISPOSITIF PERMETTANT DE DETERMINER DES PROFILS DE CONCENTRATION DE SUBSTANCES LIQUIDES OU GAZEUSES LE LONG D'UNE SECTION

(30) Priorität: 29.09.1995 DE 19536472
(43) Veröffentlichungstag der Anmeldung: 15.07.1998
(73) Patentinhaber: Framatome ANP GmbH, 91050 Erlangen (DE)
(72) Erfinder: KNOBLACH, Walter, D-91058 Erlangen (DE); FRANZE, Klaus, D-90491 Nürnberg (DE); JAX, Peter, D-91056 Erlangen (DE)
(74) Vertreter: Mörtel & Höfner
(86) Internationale Anmeldenummer: DE9601741
(87) Internationale Veröffentlichungsnummer: WO97013133

(56) Entgegenhaltungen:
- DE-A- 2 431 907
- GB-A- 2 181 259
- PATENT ABSTRACTS OF JAPAN vol. 11, no. 279 (P-614), 10.September 1987 & JP 62 076425 A (TOKYO GAS CO. LTD.), 8.April 1987,

## Beschreibung

Die Erfindung betrifft eine Vorrichtung zur Bestimmung von Konzentrationsprofilen flüssiger oder gasförmiger Stoffe längs einer Strecke, bei welcher entlang der Strecke eine Leitung verlegt ist, die so ausgebildet ist, daß die Stoffe in ihr Inneres eindringen können, wobei die Leitung mit einem Prüfmedium gefüllt ist und die Säule des Prüfmediums in zeitlichen Abständen durch die Leitung durchgeschoben und an einem für die Stoffe empfindlichen Fühler vorbeigeführt wird, und wobei zwischen dem Fühler und der Leitung ein erstes Absperrmittel eingeschaltet ist.

Eine solche Vorrichtung ist aus der deutschen Patentschrift 24 31 907 bekannt. Danach ist die Leitung aus einem Schlauch gebildet, der entlang einer zu überwachenden Strecke, bsp. einer Pipeline, verlegt wird. Der Schlauch ist mit Luft als Prüfmedium gefüllt. Bei Auftreten eines Lecks gelangen Stoffe am Ort des Lecks in den Schlauch und bilden so eine Marke in der Säule des Prüfmediums. Das eine Ende des Schlauches ist mit einem Ventil versehen, das den Fühler vom Schlauch trennt. Das andere Ende des Schlauchs ist offen. Zur Messung des Konzentrationsprofils wird das Ventil geöffnet und die Säule des Prüfmediums am Fühler vorbeigeführt. Aus der Aufzeichnung der Zeit des Vorbeiführens gegen das Führersignal läßt sich feststellen, an welchem Ort das Leck in der Strecke sich befindet.

Dieser bekannten Vorrichtung haftet jedoch der Mangel an, daß gerade bei langen zu überwachenden Strecken und damit bei langen Leitungen die Säule des Prüfmediums durch den Einfluß von Luftdruckschwankungen nicht ortsfest ist, was zu starken Meßfehlern führt.

Der Erfindung liegt die Aufgabe zugrunde, eine Vorrichtung zur Bestimmung von Konzentrationsprofilen flüssiger oder gasförmiger Stoffe längs einer Strecke zu schaffen, deren Meßgenauigkeit verbessert ist.

Diese Aufgabe wird durch die Merkmale des Patentanspruchs 1 gelöst. Zweckmäßige Weiterbildungen der Erfindung ergeben sich aus den Merkmalen der Patentansprüche 2 bis 5.

Nach Maßgabe der Erfindung besteht die Lösung der Aufgabe darin, daß mindestens ein zweites Absperrmittel in die Leitung eingeschaltet ist, welches die Säule des Prüfmediums im Ruhezustand im wesentlichen ortsfest hält.

Diese Vorrichtung hat den Vorteil, daß die durch Lageveränderungen der Säule des Prüfmediums hervorgerufenen Meßfehler vermieden und damit die Meßgenauigkeit erhöht wird.

Nach einer vorteilhaften Ausgestaltung der Erfindung ist eine Einrichtung vorgesehen, die das zweite Absperrmittel bei Über- oder Unterschreiten eines in der Leitung abfallenden Druckschwellwerts öffnet. Vorteilhafterweise umfaßt die Einrichtung eine Zeitschaltung, mittels derer das zweite Absperrmittel nach einer voreingestellten Zeit automatisch geschlossen wird. Zweckmäßigerweise umfaßt die Einrichtung einen mit der Leitung in Verbindung stehenden Druckschalter, der bei Über- oder Unterschreiten eines vorgegebenen Druckschwellwerts ein Steuersignal liefert. Dieses Steuersignal dient zur Aktivierung einer ebenfalls von der Einrichtung umfaßten Steuerungselektronik, die ein Öffnen des zweiten Absperrmittels bewirkt.

In der Zeichnung ist ein bevorzugtes Ausführungsbeispiel der Erfindung dargestellt.

Es zeigt

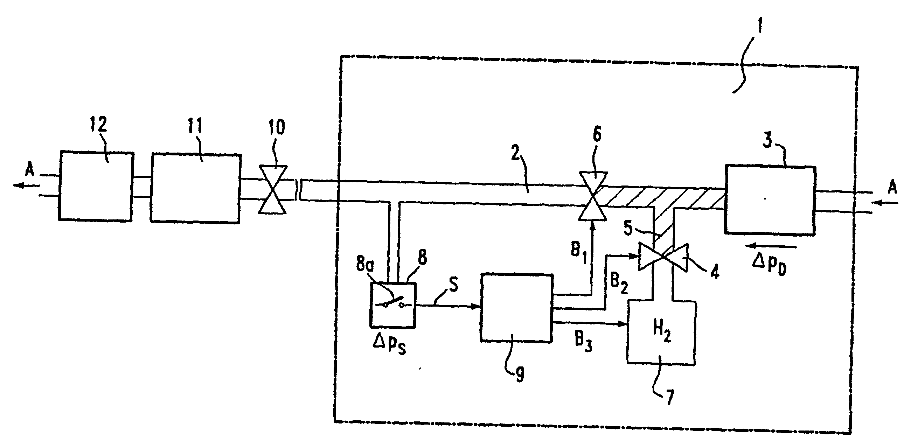

Fig. 1 ein Blockschaltbild.

Fig. 1 zeigt eine erfindungsgemäße Vorrichtung 1 schematisch anhand eines Blockschaltbilds. Der Pfeil A bezeichnet die Strömungsrichtung in einer Leitung 2. Die Leitung 2, die bsp. aus einem Diffusionsschlauch gebildet ist, weist ein erstes Ventil 10 und ein einer fakultativ vorgesehenen Drosselstrecke 3 in Strömungsrichtung nachgeschaltetes zweites Ventil 6 auf. Stromabwärts des ersten Ventils 10 ist ein Gassensor 11 gefolgt von einer Saugpumpe 12 angeordnet.

Ein drittes Ventil 4 ist in eine Aufgabeleitung 5 eingeschaltet, die zwischen der Drosselstrecke 3 und dem zweiten Ventil 6 in die Leitung 2 mündet und diese mit einer Elektrolysezelle 7 verbindet, die bei Bedarf Kalibriergas, insbesondere Wasserstoff, bereitstellt.

Stromabwärts des zweiten Ventils 6 ist ein Vakuumschalter 8 vorgesehen, der mit einer Steuerungselektronik 9, wie mit dem **Pfeil S** gezeigt ist, verbunden ist. Die Steuerungselektronik 9 ist, wie die Pfeile B₁-B₃ verdeutlichen, mit dem dritten Ventil 4, dem zweiten Ventil 6 und mit der Elektrolysezelle 7 verbunden.

Die Funktionsweise der erfindungsgemäßen Vorrichtung ist die folgende.

Solange keine Messung erfolgt, ist das erste Ventil 10, das zweite Ventil 6 und das dritte Ventil 4 geschlossen. In der Leitung 2 herrscht etwa Atmosphärendruck. Bei Beginn der Messung wird die Saugpumpe 12 in Betrieb gesetzt und das erste Ventil 10 geöffnet, so daß das in der Leitung 2 befindliche Gasvolumen vorbei an den Gassensoren 11 abgesaugt wird. Damit entsteht in der Leitung 2 ein Unterdruck bzw. ein Differenzdruck. Dieser wird vom Druckschalter 8 erfaßt. Bei Unterschreiten eines vorgegebenen Druckschwellwerts schaltet der Druckschalter und gibt ein Steuersignal an die Steuerungselektronik 9. Der Druckschwellwert ist dabei insbesondere so bemessen, daß er kleiner ist als der Atmosphärendruck abzüglich eines Betrags, der den zu erwartenden Luftdrckschwankungen entspricht. Die Steuerungselektronik 9 setzt die Elektrolysezelle 7 in Betrieb und bewirkt nachfolgend ein kurzzeitiges Öffnen des dritten Ventils 4. Danach wird das zweite Ventil 6 geöffnet und die Elektrolysezelle 7 abgeschaltet. Mit der durch die Saugpumpe 12 aus der Leitung 2 abgesaugten Gassäule wird das aufgegebene Kalibriergas über die Gassensoren 11 geleitet und markiert so das Ende der Säule des Prüfmediums. Das zweite Ventil 6 wird nach Beendigung der Messung wieder automatisch bsp. durch eine in der Steuerungseinrichtung 9 vorgesehene Zeitschaltung geschlossen.

## Patentansprüche

1. Vorrichtung zur Bestimmung von Konzentrationsprofilen flüssiger oder gasförmiger Stoffe längs einer Strecke, bei welcher entlang der Strecke eine Leitung (2) verlegt ist, die so ausgebildet ist, daß die Stoffe entlang der Strecke in ihr Inneres eindringen können, wobei die Leitung (2) mit einem Prüfmedium gefüllt ist und die Säule des Prüfmediums in zeitlichen Abständen durch die Leitung (2) hindurchgeschoben und an einem für die Stoffe empfindlichen Fühler (11) vorbeigeführt wird, und wobei zwischen dem Fühler (11) und der Leitung ein erstes Absperrmittel (10) eingeschaltet ist,
**dadurch gekennzeichnet, daß** mindestens ein zweites Absperrmittel (6) in die Leitung (2) eingeschaltet ist, welches die Säule des Prüfmediums im Ruhezustand im wesentlichen ortsfest hält.

2. Vorrichtung nach Anspruch 1,
**dadurch gekennzeichnet, daß** eine Einrichtung (8, 9) vorgesehen ist, die das zweite Absperrmittel (6) bei Über- oder Unterschreiten eines in der Leitung (2) abfallenden Druckschwellwerts öffnet.

3. Vorrichtung nach Anspruch 2,
**dadurch gekennzeichnet, daß** die Einrichtung (9) eine Zeitschaltung aufweist, mittels derer das zweite Absperrmittel (6) nach einer voreingestellten Zeit automatisch schließbar ist.

4. Vorrichtung nach einem der Ansprüche 2 oder 3,
**dadurch gekennzeichnet, daß** die Einrichtung (9) einen mit der Leitung (2) in Verbindung stehenden Druckschalter (8) aufweist, der bei Über- oder Unterschreiten eines Druckschwellwerts ein Steuersignal zur Verfügung stellt.

5. Vorrichtung nach einem der Ansprüche 2 bis 4,
**dadurch gekennzeichnet, daß** die Einrichtung (9) eine Steuerungselektronik (9) aufweist, die bei Anliegen eines vom Druckschalter (8) gelieferten Steuersignals das zweite Absperrmittel (6) öffnet.

## Claims

1. Device for determining concentration profiles of liquid or gaseous substances along a given path, in which a line (2), which is formed in such a way that the substances can penetrate into its interior along the path, is laid along the path, the line (2) being filled with a test medium and the column of the test medium being pushed through the line (2) at time intervals and taken past a sensor (11) which is sensitive to the substances, and a first shut-off means (10) being inserted between the sensor (11) and the line, **characterized in that** at least a second shut-off means (6), which keeps the column of test medium substantially in a fixed place in the state of rest, is inserted in the line (2).

2. Device according to Claim 1, **characterized in that** a mechanism (8, 9), which opens the second shut-off means (6) when a threshold pressure value dropping in the line (2) is overshot or undershot, is provided.

3. Device according to Claim 2, **characterized in that** the mechanism (9) has a timing circuit, by means of which the second shut-off means (6) can be automatically closed after a preset time.

4. Device according to either of Claims 2 and 3, **characterized in that** the mechanism (9) has a pressure switch (8), which is in connection with the line (2) and provides a control signal when a threshold pressure value is overshot or undershot.

5. Device according to one of Claims 2 to 4, **characterized in that** the mechanism (9) has control electronics (9), which open the second shut-off means (6) when a control signal supplied by the pressure switch (8) is obtained.

## Revendications

1. Dispositif de détermination de profils de concentration de substances liquides ou gazeuses le long d'une section, dans lequel il est posé le long de la section un conduit (2) constitué de façon à ce que les substances puissent y pénétrer à l'intérieur le long de la section, le conduit (2) étant empli d'un fluide étalon et la colonne du fluide étalon étant poussée à certains intervalle de temps dans le conduit (2) et passant devant une sonde (11) sensible à la substance, un premier moyen (10) d'arrêt étant monté entre la sonde (11) et le conduit, **caractérisé en ce qu'**il est monté dans le conduit (2) au moins un deuxième moyen (6) d'arrêt qui maintient sensiblement fixe la colonne du fluide étalon à l'état de repos.

2. Dispositif suivant la revendication 1,
**caractérisé en ce qu'**il est prévu un dispositif (8, 9) qui ouvre le deuxième moyen (6) d'arrêt lorsque l'on passe au-dessus ou en-dessous d'une valeur de seuil de pression chutant dans le conduit (2).

3. Dispositif suivant la revendication 2,
**caractérisé en ce que** le dispositif (9) comporte une minuterie au moyen de laquelle le deuxième moyen (6) d'arrêt peut être fermé automatiquement après une durée réglée à l'avance.

4. Dispositif suivant l'une des revendications 2 ou 3,
**caractérisé en ce que** le dispositif (9) comporte un interrupteur (8) à pression qui communique avec le conduit (2) et qui met à disposition un signal de commande lorsque l'on passe au-dessus ou en-dessous d'une valeur de seuil de pression.

5. Dispositif suivant l'une des revendications 2 à 4,
**caractérisé en ce que** le dispositif (9) comporte une électronique (9) de commande qui ouvre le deuxième moyen (6) d'arrêt lors de l'application d'un signal de commande fourni par l'interrupteur (8) à pression.
